# EUROPÄISCHE PATENTSCHRIFT

(11) **EP 3 264 943 B1**
(45) Veröffentlichungstag und Bekanntmachung des Hinweises auf die Patenterteilung: **23.01.2019**
(21) Anmeldenummer: 16707442.6
(22) Anmeldetag: 02.03.2016
(51) Int. Cl.: A47C 13/00, A47C 7/42, A47C 7/54, F16B 12/26

(54) **MÖBEL UND MÖBELBESCHLAG ZUR VERBINDUNG VON MÖBELTEILEN**
PIECE OF FURNITURE, AND FURNITURE FITTING FOR CONNECTING FURNITURE PARTS
MEUBLE ET FERRURE DE MEUBLE POUR RELIER DES PARTIES DE MEUBLE

(30) Priorität: 05.03.2015 DE 102015103225; 18.01.2016 DE 102016100753
(43) Veröffentlichungstag der Anmeldung: 10.01.2018
(73) Patentinhaber: Hettich Franke GmbH & Co. KG, 72336 Balingen-Weilstetten (DE)
(72) Erfinder: STAUSS, Gerd, 72474 Winterlingen (DE); NILL, Oliver, 72379 Hechingen (DE)
(74) Vertreter: Kleine, Hubertus
(86) Internationale Anmeldenummer: PCT/EP2016/054405
(87) Internationale Veröffentlichungsnummer: WO 2016/139237

(56) Entgegenhaltungen:
- EP-A1- 2 792 276
- EP-A1- 2 796 074
- US-A1- 2007 120 410

## Beschreibung

Die Erfindung betrifft einen Möbelbeschlag zur Verbindung von Möbelteilen, insbesondere von Polstermöbeln, mit einem an einem ersten Möbelteil befestigbaren ersten Beschlagteil und einem an einem zweiten Möbelteil befestigbaren zweiten Beschlagteil. Die Erfindung betrifft weiterhin ein Möbel mit mindestens zwei Möbelteilen.

Zur Verbindung von großen Möbelteilen, wie beispielsweise Sitzteilen, Rückenlehnen oder Seitenteilen eines Polstermöbels, werden häufig Steckverbinder eingesetzt. Nachteilig bei derartigen Steckverbindern ist, dass sie bei Bewegung der Möbelteile entgegen der Fügerichtung beim Verbinden wieder gelöst werden. Alternativ oder zusätzlich werden bei derartigen großen Möbelteilen von außen aufmontierte Verbindungslaschen verwendet, was aufgrund von Verletzungsgefahren und aus Designgründen jedoch nur in nicht sichtbaren Bereichen, beispielsweise an einer Unterseite eines Sofas, möglich ist.

In der Druckschrift AT 502 027 A4 ist eine Halterung für einen kastenförmigen Gegenstand beschrieben, bei der an gegenüberliegenden Seitenflächen des Gegenstands hervorstehende bolzenförmige Festlegungselemente vorhanden sind, die in komplementär ausgebildete Aufnahmen an der die Seitenflächen des Gegenstands wenigstens teilweise übergreifenden Halterung zusammenwirken. Der Gegenstand wird mit zumindest einem der Festlegungselemente in die zugehörige Ausnehmung eingesetzt und so verschwenkt, dass er auch mit dem zweiten Festlegungselement in die zugeordnete zweite Ausnehmung eingreift. Ein Wiederausschwenken aus der zweiten Ausnehmung wird mithilfe eines zusätzlichen Verbindungselements, beispielweise einer Schraube oder einer Schnappverbindung, das zwischen dem Gegenstand und der Halterung ausgebildet ist, verhindert. Kräfte zwischen der Halterung und dem Gegenstand werden im Wesentlichen von den Festlegungselementen bzw. den Ausnehmungen aufgenommen. Die zusätzliche Verbindung braucht lediglich eventuell wirkende Drehmomente sowie Zug- und Schiebekräfte zwischen Gegenstand und Halterung aufnehmen, die entgegen der Einschwenkrichtung oder jeweils rechtwinklig zu der Einschwenkrichtung wirken.

Die in der Druckschrift AT 502 027 A4 beschriebene Verbindungsmethode ist somit gut zur Aufnahme großer Kräfte geeignet. Die Notwendigkeit, zusätzlich zu den Festlegungselementen bzw. Ausnehmungen noch eine zusätzliche Schraub- und/oder Rastverbindung vorzunehmen, verkompliziert das vorgestellte Prinzip jedoch und macht eine Anwendung innerhalb eines Möbelbeschlags schwierig. Eine Verschraubung als zusätzliche Verbindung ist zudem bei einem derartigen Möbelbeschlag wiederum aufgrund von Verletzungsgefahren und aus Designgründen nicht vorteilhaft. Eine separate Rastverbindung als zusätzliche Verbindung ist insofern problematisch, als dass sie geeignet sein müsste, die unter Umständen großen wirkenden Drehmomente zwischen Möbelteilen, beispielsweise zwischen einem Sitzteil und einer Rückenlehne oder einem Sitzteil und einer Armstütze eines Polstermöbels aufzunehmen.

Die Druckschrift EP 2 796 074 A1 zeigt ein Sitzmöbel mit einer Rückenlehne, die einen Rahmen mit seitlichen Trägern aufweist, die über mindestens eine Querstrebe miteinander verbunden sind. An jeder Seite eines Gestells des Möbels ist eine plattenförmige Verbindungseinrichtung angeordnet, die jeweils eine Nut aufweist, in die die Querstrebe des Rahmens der Rückenlehne eingesetzt wird. Beabstandet zu der Nut ist an der Verbindungseinrichtung ein gegen eine Federkraft verschiebbarer Bolzen positioniert. Die Rückenlehne wird nach dem Einsetzen in die Nut verschwenkt, bis der Bolzen hinter einer Rastnase verrastet, die an einem unteren Ende der Träger ausgebildet ist.

Der beschriebene Bewegungsablauf erlaubt eine einfache Montage der Rückenlehne. Die Verbindungseinrichtungen sind jedoch nur mit einer entsprechenden Rahmenstruktur des zu verbindenden Möbelteils mit der Querstrebe verwendbar.

Es ist eine Aufgabe der vorliegenden Erfindung, einen Möbelbeschlag der eingangs genannten Art für Möbelteile, insbesondere für große Möbelteile von Polstermöbeln, zu schaffen, der universell einetzbar ist und nach dem Verbinden große zwischen den Möbelteilen wirkende Kräfte und Drehmomente aufnehmen kann und eine verdeckte Verbindung schafft, die möglichst werkzeuglos einfach hergestellt werden kann. Es ist eine weitere Aufgabe der vorliegenden Erfindung, ein Möbel mit einfach miteinander zu verbindenden Möbelteilen zu schaffen.

Diese Aufgabe wird durch ein Möbelbeschlag bzw. ein Möbel mit den Merkmalen des jeweiligen unabhängigen Anspruchs gelöst. Vorteilhafte Ausgestaltungen und Weiterbildungen sind in den abhängigen Ansprüchen angegeben.

Ein erfindungsgemäßer Möbelbeschlag der eingangs genannten Art zeichnet sich dadurch aus, dass das erste Beschlagteil eine Basis aufweist und zwei parallel zueinander und parallel zu der Basis angeordnete Achsen, wobei eine erste der Achsen fest mit dem ersten Beschlagteil verbunden ist und eine zweite der Achsen relativ zu der ersten Achse in einer Richtung senkrecht zu den Achsen gegen eine Kraft eines Kraftspeichers verschiebbar gelagert ist. Das zweite Beschlagteil weist eine erste und eine zweite Aufnahme für die erste bzw. zweite Achse auf, wobei das zweite Beschlagteil mit der ersten Aufnahme auf die erste Achse aufsetzbar ist und um die erste Achse verschwenkbar ist und die zweite Achse beim Verschwenken in die zweite Aufnahme einrastet, um die beiden Beschlagteile miteinander zu verbinden.

Durch die Verrastung der zweiten Achse in der entsprechenden Aufnahme kann auf ein zusätzliches Verbindungselement zwischen den beiden Beschlagsteilen verzichtet werden. Das Verbinden der Möbelteile kann durch den Rastvorgang werkzeuglos und verdeckt erfolgen.

In einer vorteilhaften Ausgestaltung des Möbelbeschlags weist das erste Beschlagteil ein u-förmiges Grundelement auf, das die Basis und zwei Schenkel umfasst, wobei die Achsen die Schenkel durchdringen und jeweils zu beiden Seiten über äußere Flächen der Schenkel herausragen. Bevorzugt ist an mindestens einem der Schenkel des Grundelements des ersten Beschlagteils ein Vorsprung ausgebildet, der ein paralleles Verschieben des zweiten Beschlagteiles zum Grundelement im zusammengefügten Zustand des Möbelbeschlags verhindert. Hierdurch wird zusätzliche Stabilität des Möbelbeschlags im verrasteten Zustand erzielt.

In einer weiteren vorteilhaften Ausgestaltung des Möbelbeschlags ist auch das zweite Beschlagteil u-förmig mit einer Basis und Schenkeln ausgebildet, wobei die erste Aufnahme durch jeweils eine erste Aussparung in den Schenkeln gebildet ist und die zweite Aufnahme durch jeweils eine gegenüberliegende zweite Aussparung in den Schenkeln. Die u-förmige Grundform der Beschlagteile ermöglicht bei einfachem Aufbau eine hohe Belastbarkeit des Beschlags. Die über die Schenkel hervorstehenden Achsen des ersten Beschlagteils dienen als bolzenähnliche Elemente, die in die Aussparungen in dem zweiten Beschlagteil eingreifen.

Es wird angemerkt, dass die Achsen, insbesondere die erste Achse, nicht durchgängig ausgebildet sein muss. Im Rahmen der Anmeldung stellen beispielsweise aus den Schenkeln des ersten Beschlagteils ausgestellte bolzenähnliche Laschen eine erste Achse dar. Auf die ausgestellten bolzenähnlichen Laschen kann das zweite Beschlagteil ebenfalls aufgesetzt werden und es kann um diese Abschnitte verschwenkt werden.

Besonders bevorzugt sind die erste Aussparung und die zweite Aussparung jeweils an gegenüberliegenden Seitenkanten des Schenkels angeordnet und jeweils in Richtung der Seitenkante offen. Die nach außen offene erste Aussparung kann so auf die erste Achse aufgesetzt werden, wobei die in die gegenüberliegende Richtung offene zweite Aussparung eine Rastmulde bildet, in die die mit Federkraft beaufschlagte zweite Achse einrastet. Als Kraftspeicher kann bei dieser Geometrie besonders bevorzugt mindestens eine Zugfeder dienen, die an der ersten und der zweiten Achse angreift. Eine Führung der zweiten Achse im Grundelement kann konstruktiv einfach in Langlöchern erfolgen, die in den Schenkeln ausgebildet sind.

Weiter bevorzugt verbreitert sich die erste Aussparung zur Seitenkante des Schenkels hin v-förmig, wodurch eine Führungswirkung beim Aufsetzen des zweiten auf das erste Beschlagsteil gegeben ist. So wird das Zusammensetzen auch von schweren Möbelteilen, die sich nur schlecht genau positionieren lassen, vereinfacht.

In einer weiteren bevorzugten Ausgestaltung des Möbelbeschlags ist die erste Aussparung des zweiten Beschlagteils in Richtung der Längskante des Schenkels freigeschnitten. Durch diesen Freischnitt ist es möglich, das zweite Beschlagteil nicht nur in einer Schwenkbewegung, sondern auch in einer (linearen) Verschiebebewegung auf das erste Beschlagteil zu mit diesem zu verrasten. Durch diese Ausgestaltung des Möbelbeschlags können Möbelteile mit mehreren Möbelbeschlägen miteinander verbunden werden, auch wenn diese nicht in einer Linie angeordnet sind.

In einer weiteren bevorzugten Ausgestaltung des Möbelbeschlags ist an einer der Basis abgewandten Seite der ersten Aussparung eine zusätzliche Mulde ausgebildet ist. Durch die neben der Rastmulde zusätzlich vorgesehene Mulde kann ein Verrasten der beiden Möbelbeschlagsteile in einem relativ flachen Winkel zueinander erfolgen.

Um den Rastvorgang zu unterstützen, ist in einer weiteren bevorzugten Ausgestaltung an einer freien Längsseite des jeweiligen Schenkels im Bereich der zweiten Aussparung eine Anlaufschräge für die zweite Achse vorhanden.

In einer weiteren vorteilhaften Ausgestaltung des Möbelbeschlags ist in das Grundelement ein ebenfalls u-förmiges Entriegelungsblech mit einer Basis und Schenkeln eingelegt. Das Entriegelungsblech ist durch seine Schenkel mit der zweiten Achse verbunden und gegenüber der ersten Achse und dem Grundelement verschiebbar. Bevorzugt ist an zumindest einer rechtwinkelig zu den Schenkeln verlaufenden Seite der Basis des Entriegelungsblech mindestens eine Entriegelungslasche ausgebildet.

Zum Trennen der Beschlagsteile bei einem Demontieren des Möbels ist es notwendig, die zweite Achse gegenüber der ersten zu verschieben, um die erfolgte Verrastung zu lösen. Dieses wird durch das Entriegelungsblech erleichtert. Je nach Anordnung der Entriegelungslasche an dem Entriegelungsblech kann entweder ein Druck oder ein Zug auf die Entriegelungslasche ausgeübt werden, um das Entriegelungsblech innerhalb des u-förmigen Grundelements zu verschieben und damit die zweite Achse aus der Verrastung zu bewegen. Das Entriegelungsblech verhindert dabei eine Schrägstellung der zweiten Achse, auch wenn die Entriegelungslaschen nicht genau mittig ober- bzw. unterhalb des Angriffspunkts des Kraftspeichers, beispielsweise der genannten Zugfeder, betätigt werden. Zudem können aus der Basis des Entriegelungsbleches Führungslaschen ausgestellt sein, die eine zumindest seitliche Führung für die Zugfeder bilden.

In einer weiteren vorteilhaften Ausgestaltung des Möbelbeschlags sind Langlöcher zur Führung der zweiten Achse in den Schenkeln des Grundelements L-förmig geformt. Dabei verläuft ein Abschnitt des Langlochs quer zu der Basis des Grundelements und stellt eine Ablageposition für die zweite Achse in einem gespannten Zustand der mindestens einen Zugfeder bereit. Auf diese Weise kann das erste Beschlagteil in einem Zustand mit bereits gespannter Zugfeder mit dem zweiten Beschlagteil verrastet werden, wodurch der Rastvorgang nur geringe Kräfte beim Zusammenfügen der Beschlagteile erfordert.

Bevorzugt weist dabei das Entriegelungsblech mindestens ein Federelement auf, um das Entriegelungsblech zumindest in einem Bereich der zweiten Achse von der Basis des Grundelements wegzudrücken und die zweite Achse so in der Ablageposition zu halten und/oder in die Ablageposition zu bewegen. Beim Vorspannen der mindestens einen Zugfeder bzw. bei einem Trennen der beiden Beschlagteile mithilfe des Entriegelungsbleches wird die zweite Achse durch das mindestens eine Federelement automatisch in die Ablageposition gebracht. Das mindestens eine Federelement kann beispielsweise auf einfache und kostengünstige Weise durch eine aus der Basis des Entriegelungsblechs ausgestellte Federzunge gebildet werden oder auch alternativ durch ein separates Bauteil, beispielsweise einer Schenkelfeder.

Besonders einfach und kostengünstig kann der Möbelbeschlag hergestellt werden, wenn das Grundelement und/oder das Entriegelungsblech und/ oder das zweite Beschlagteil aus Blech gefertigt sind, bevorzugt in einem Stanz- und Biegeprozess.

Ein erfindungsgemäßes Möbel mit mindestens zwei Möbelteilen zeichnet sich dadurch aus, dass es zum Verbinden der mindestens zwei Möbelteile wenigstens einen derartigen Möbelbeschlag aufweist. Es ergeben sich die im Zusammenhang mit dem Möbelbeschlag beschriebenen Vorteile.

Die Erfindung wird nachfolgend anhand eines Ausführungsbeispiels mithilfe von Figuren näher erläutert. Die Figuren zeigen:
- Fig. 1: eine schematische isometrische Darstellung eines Möbels mit mehreren, teilweise voneinander getrennten Möbelteilen mit Möbelbeschlägen;
- Fig. 2: das in Fig. 1 dargestellte Möbel mit zusammengesetzten Möbelteilen;
- Fig. 3: eine isometrische Ansicht eines ersten Beschlagteils eines Möbelbeschlags in einem ersten Ausführungsbeispiel;
- Fig. 4: eine isometrische Ansicht eines Möbelbeschlags mit dem ersten Beschlagteil gemäß Fig. 3 und einem angesetzten zweiten Beschlagteil;
- Fig. 5a-e: jeweils eine schematische Seitenansicht des Möbelbeschlags der Fig. 4 in verschiedenen Stadien eines Verrastungsvorgangs;
- Fig. 6a, b: jeweils eine isometrische Ansicht eines Möbelbeschlags in einem zweiten Ausführungsbeispiel in verschiedenen Verrastungszuständen;
- Fig. 7a, b: eine Vorder- und eine Seitenansicht des ersten Beschlagteils des Möbelbeschlags gemäß Fig. 6a, b;
- Fig. 8a-c: jeweils eine isometrische Ansicht verschiedener Komponenten des Möbelbeschlags gemäß Fig. 6a, b;
- Fig. 9a, b: eine Seiten-bzw. eine Vorderansicht des ersten Beschlagteils des Möbelbeschlags gemäß Fig. 6a, b in einem vorgespannten Zustand;
- Fig. 9c: eine Seitenansicht des ersten Beschlagteils gemäß Fig. 9a mit angesetztem zweiten Beschlagteil;
- Fig. 10a, b: unterschiedliche isometrische Ansichten eines Möbelbeschlags in einem dritten Ausführungsbeispiel;
- Fig. 10c: eine isometrische Ansicht des zweiten Beschlagteils des Möbelbeschlags gemäß den Figuren 10a, 10b;
- Fig. 11a: eine schematische isometrische Darstellung eines Möbels mit mehreren, teilweise voneinander getrennten Möbelteilen mit Möbelbeschlägen;
- Fig. 11b: eine schematische Darstellung zur Verdeutlichung des Zusammensetzen der Möbelteile des Möbels gemäß Fig.11a; und
- Fig. 12a-c: jeweils eine Seitenansicht eines Möbelbeschlags in einem vierten Ausführungsbeispiel in verschiedenen Verrastungszuständen.

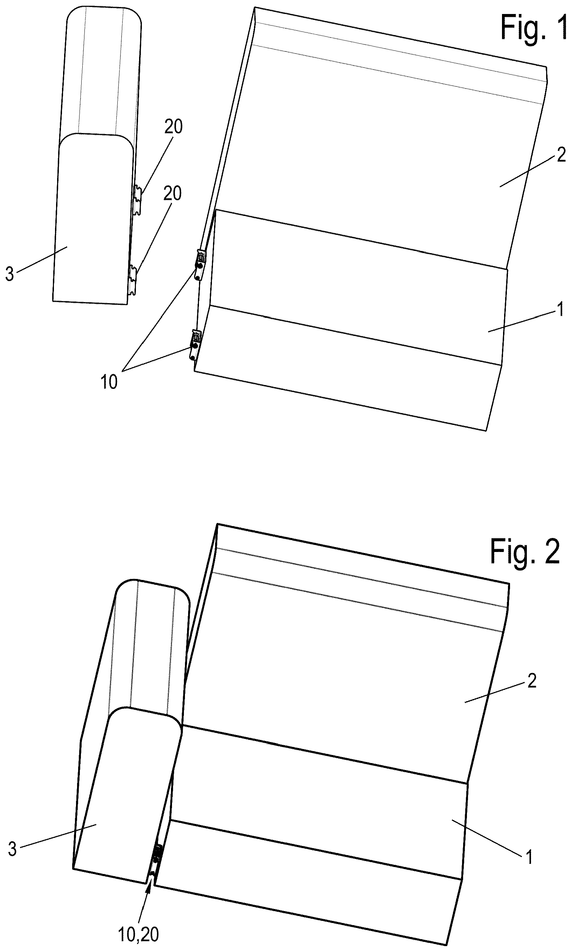

Die Figuren 1 und 2 zeigen in jeweils einer isometrischen schematischen Zeichnung ein aus mehreren Möbelteilen zusammengesetztes Sitzmöbel. Konkret ist ein Sofa mit einem Sitzteil 1, einer Rückenlehne 2 und einer Armstütze 3 dargestellt. Zur Verbindung der einzelnen Möbelteile sind Möbelbeschläge vorgesehen, die jeweils ein erstes Beschlagteil 10 und ein zweites Beschlagteil 20 aufweisen. Das erste Beschlagteil 10 ist jeweils an einem der Möbelteile befestigt, beispielsweise mithilfe von Schrauben, und das dazugehörige zweite Beschlagteil 20 ist zu einem der anderen Möbelteile, das an dem zu verbindenden Möbelteil angeordnet werden soll, derart platziert und daran befestigt, dass die beabsichtigte Anordnung zueinander lagegerecht erfolgt..

Bei dem in der Fig. 1 dargestellten Beispiel sind das Sitzteil 1 und die Rückenlehne 2 bereits miteinander verbunden. Zur Verbindung der Armstütze 3 sind vorliegend zwei Möbelbeschläge vorgesehen, von denen jeweils das erste Beschlagteil 10 am Sitzteil 1 und das zweite Beschlagteil 20 an der Armstütze 3 montiert sind. Die Armstütze 3 wird in leicht geneigter Stellung, wie das in Fig. 1 dargestellt ist, an das Sitzteil 1 angesetzt, indem die zweiten Beschlagteile 20 in ihrem unteren Bereich auf die ersten Beschlagteile 10 aufgesetzt werden. Sodann wird die Armstütze 3 in eine senkrechte Position geschwenkt, wodurch die ersten und die zweiten Beschlagteile 10, 20 der Möbelbeschläge miteinander verrasten und die Armstütze 3 gegenüber dem Sitzteil 1 festlegt wird.

Der so erzielte zusammengebaute Zustand des Möbels ist in Fig. 2 dargestellt. Die Möbelbeschläge sind vollständig im Polsterspalt zwischen dem Sitzteil 1 und der Armstütze 3 verdeckt angeordnet und bei entsprechendem Polstervolumen nicht mehr sichtbar.

Die Anzahl von zwei Möbelbeschlägen, die zwischen dem Sitzteil 1 und der Armstütze 3 in diesem Beispiel verwendet werden, ist rein beispielhaft. Die Anzahl der zur Verbindung von Möbelteilen verwendeten Möbelbeschläge kann je nach Größe der Möbelteile und Belastung variiert werden.

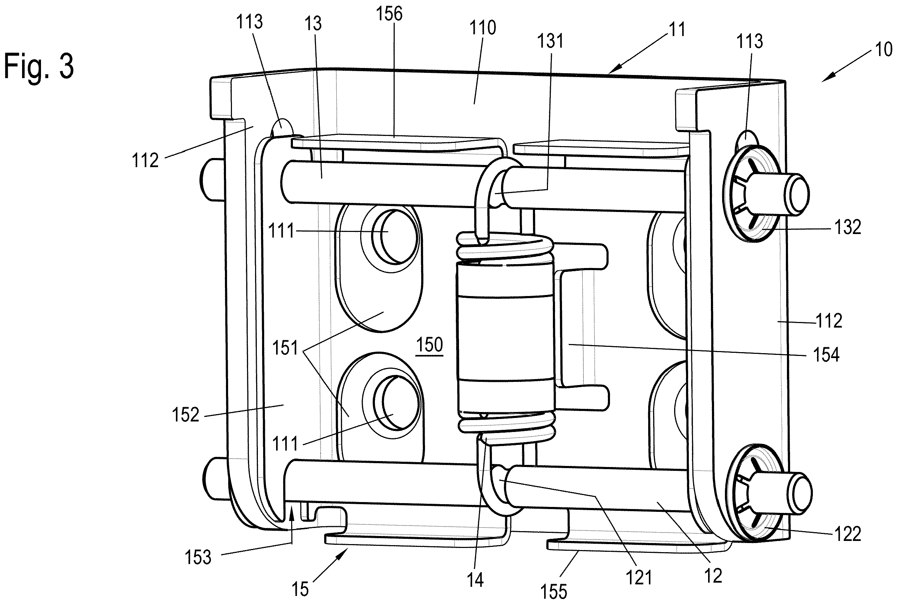

In Fig. 3 ist das erste Beschlagteil 10, das im Beispiel der Fig. 1 und 2 am Sitzteil 1 befestigt ist, in einer isometrischen Zeichnung detaillierter dargestellt. Es wird darauf hingewiesen, dass sich in der Figurenbeschreibung Begriffe wie oben, unten, links, rechts, vorne, hinten usw. ausschließlich auf die in den jeweiligen Figuren gewählte beispielhafte Darstellung beziehen. Die genannten Begriffe sind nicht einschränkend zu verstehen.

Das erste Beschlagteil 10 umfasst ein u-förmiges Grundelement 11, das bevorzugt aus Blech, beispielsweise Stahlblech oder Aluminiumblech gefertigt ist. Besonders vorteilhaft ist eine Fertigung des u-förmigen Grundelements 11 in einem Stanz- und Biegeprozess. Das Grundelement 11 weist eine Basis 110 auf, in der vorliegend vier Befestigungslöcher 111 angeordnet sind.

Seitlich sind von der Basis 110 im Wesentlichen rechtwinklig abstehende Schenkel 112 abgebogen. In den jeweiligen unteren Bereichen (bezogen auf die Darstellung der Fig. 3) der Schenkel 112 ist jeweils eine Bohrung eingebracht, durch die eine erste Achse 12 geführt ist. Die Achse 12 verläuft parallel und beabstandet zur Ebene der Basis 110 und ebenfalls parallel zu einer unteren Kante der Basis 110. Die Länge der ersten Achse 12 übersteigt den Abstand der beiden Schenkel 112 derart, dass die Achse 12 zu beiden Seiten über die äußeren Flächen der Schenkel 112 hinausragt. Gegen seitliches Verschieben ist die erste Achse 12 durch Wellensicherungen 122, die außen auf die Achse 12 gesteckt sind und die an den Schenkeln 112 anliegen, gesichert.

In dem in der Fig. 3 oben liegenden Bereich eines jeden Schenkels 112 ist jeweils ein Langloch 113 eingebracht. In diesen sich gegenüberliegenden Langlöchern 113 ist eine zweite Achse 13 geführt, die die gleiche Länge wie die erste Achse 12 hat und entsprechend ebenfalls zu beiden Seiten über die äußeren Flächen der Schenkel 112 übersteht. Auch die zweite Achse 13 ist parallel zur Ebene der Basis 110 ausgerichtet und parallel zur oberen Kante der Basis 110 und damit parallel zur ersten Achse 12. Wiederum sind Wellensicherungen 132 von außen auf die zweite Achse 13 aufgesteckt. Die Wellensicherungen 132 verhindern ein Herausrutschen der Achse 13, ermöglichen jedoch eine vertikale Bewegung der Achse 13 in einer Richtung parallel zur Basis 110 entlang der Schenkel 112 in den Langlöchern 113.

Die erste und die zweite Achse 12, 13 weisen jeweils mittig eine umlaufende Nut 121 bzw. 131 auf. Eingehängt in diese Nut ist jeweils eine Öse einer als Kraftspeicher wirkenden Feder, die als eine Zugfeder 14 ausgebildet ist. Die Zugfeder 14 zieht die beiden Achsen 12, 13 aufeinander zu, wodurch im dargestellten Grundzustand die zweite Achse 13 im unteren Bereich des Langlochs 113 positioniert ist. Dabei ist bevorzugt eine Vorspannung der Zugfeder 14 bereits im Grundzustand vorgesehen.

Weiterhin ist an dem ersten Beschlagteil der Fig. 3 ein optionales Entriegelungsblech 15 vorgesehen. Dieses Entriegelungsblech 15 ist ebenfalls u-förmig ausgebildet mit einer Basis 150 und Schenkeln 152. Die Abmessungen des Entriegelungsbleches 15 sind so bemessen, dass dieses in das u-förmige Grundelement 11 eingelegt werden kann und innerhalb dieses Grundelements 11 vertikal (bezogen auf die Ausrichtung des ersten Befestigungsteils 10 in der Fig. 3) verschoben werden kann.

In der Basis 150 des Entriegelungsbleches 15 sind Öffnungen 151 angeordnet, die die Befestigungslöcher 111 frei legen und damit eine Montage des Grundelements 11 an einem Möbelteil ermöglichen. Die beiden Achsen 12, 13 durchdringen die Schenkel 152 des Entriegelungsbleches 15. Wie in Fig. 3 zu sehen, sind für die zweite, obere Achse 13 Bohrungen in den Schenkeln 152 angeordnet und für die erste, untere Achse 12 sind längliche Aussparungen 153 vorgesehen. Entsprechend liegt das Entriegelungsblech 15 an der zweiten Achse 13 fest, wohingegen es in vertikaler Richtung gegenüber der ersten Achse 12 verschiebbar ist. An ihrem unteren bzw. oberen Ende ist die Basis 150 des Entriegelungsschiebers 15 umgebogen, wodurch eine untere Entriegelungslasche 155 und eine obere Entriegelungslasche 156 gebildet sind.

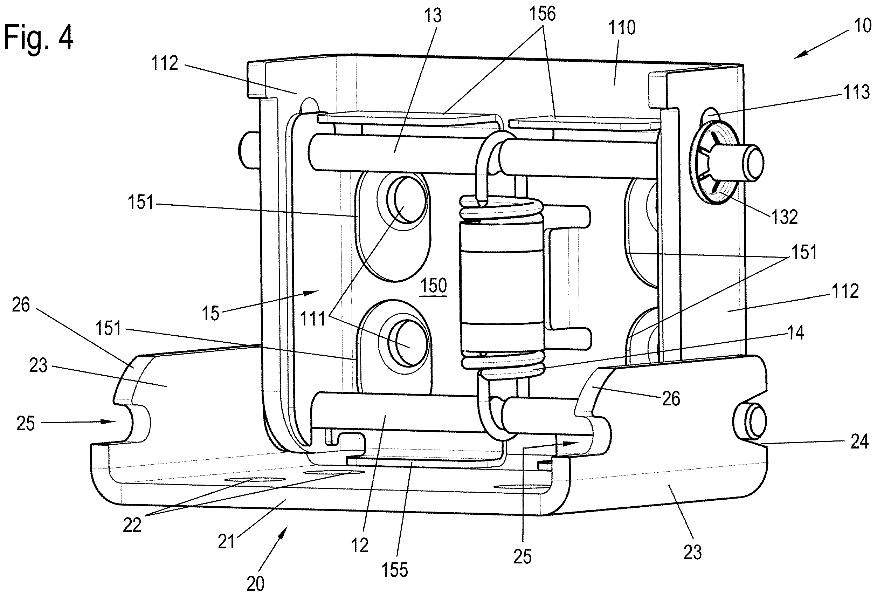

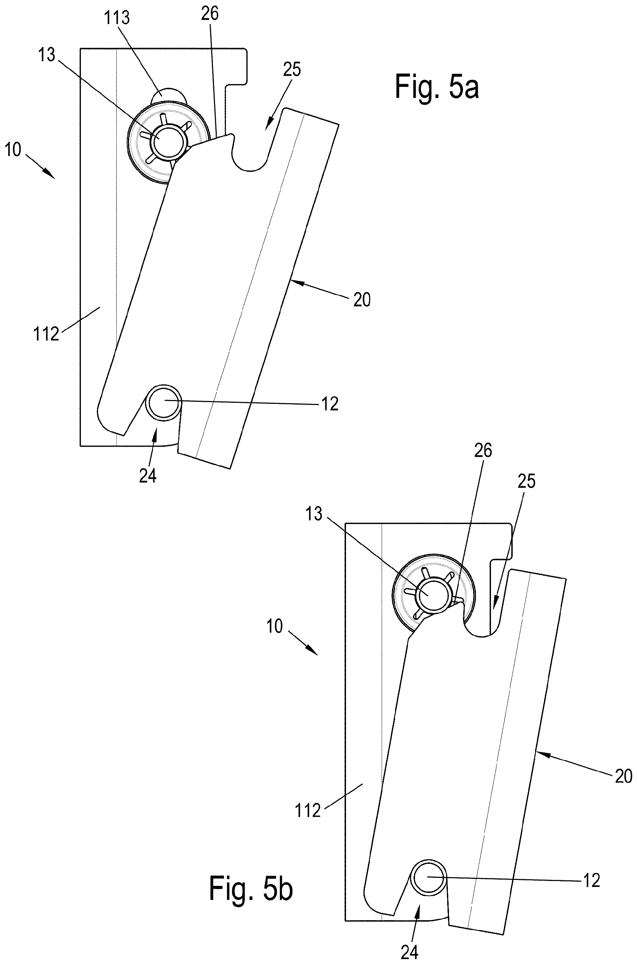

Die Funktion des ersten Beschlagteils 10 und insbesondere der Achsen 12, 13 und des Entriegelungsbleches 15 werden nachfolgend im Zusammenhang mit den Fig. 4 und 5a bis 5e näher beschrieben. Bezugszeichen zeigen in diesen Figuren gleiche oder gleichwirkende Elemente wie in den Fig. 1 bis 3.

Fig. 4 zeigt einen Möbelbeschlag, der aus dem im Zusammenhang mit Fig. 3 beschriebenen ersten Beschlagteil 10 und einem zweiten Beschlagteil 20 besteht.

Das zweite Beschlagteil 20 ist - vergleichbar mit dem Grundelement 11 des ersten Beschlagteils 10 - u-förmig ausgebildet und weist eine Basis 21 mit im Wesentlichen rechtwinklig hierzu ausgebildeten, senkrecht abstehenden Schenkeln 23 auf. Wie das Grundelement 11 ist das zweite Beschlagteil 20 bevorzugt aus Blech, insbesondere Stahl- oder Aluminiumblech in einem Stanz- und Biegeprozess gefertigt. In der Basis 21 sind Befestigungslöcher 22 angeordnet, über die das zweite Beschlagteil 20 an einem Möbelteil mittels Befestigungsmitteln festgelegt werden kann.

Die beiden Beschlagteile 10, 20 sind separate Teile, die zunächst voneinander getrennt sind, sodass diese an den zu verbindenden Möbelteilen vollständig voneinander getrennt und lagerichtig befestigt werden können. Zum Verbinden der Möbelteile können die beiden Beschlagteile 10, 20 danach miteinander verrastet werden. Zu diesem Zweck ist in den Schenkeln 23 an jeweils einer ihrer Seitenkanten, die in der Figur 4 rechts dargestellt ist, eine zur Seitenkante hin offene erste Aussparung 24 eingebracht. Mit der ersten Aussparung 24 wird das zweite Beschlagteil 20 auf die überstehenden Enden der ersten Achse 12 des ersten Beschlagteils 10 aufgesetzt. Der Abstand der Schenkel 23 beim zweiten Beschlagteil 20 ist so gewählt, dass das zweite Beschlagteil 20 das erste Beschlagteil 10 einschließlich der über die Flächen der Schenkel 112 hinausragenden Wellensicherungen 122, 132 umfasst. Die erste Aussparung 24 ist leicht v-förmig ausgebildet und weitet sich zur Seitenkante der Schenkel 23 hin auf. Dieses erleichtert das Aufsetzen des zweiten Beschlagteils 20 auf das erste Beschlagteil 10, auch wenn das zweite Beschlagteil 20 an einem schweren, nicht einfach in Position zu bringenden Möbelteil befestigt ist.

Das zweite Beschlagteil 20 kann aus der in Fig. 4 dargestellten Stellung im Uhrzeigersinn hochgeschwenkt werden, wobei die erste Achse 12 eine Schwenkachse darstellt. An der der Aussparung 24 gegenüberliegenden Seitenkante des Schenkels 23 ist eine zweite Aussparung 25 angeordnet, in die die zweite Achse 13 rastend eingreifen kann. An den freien Längskanten der Schenkel 23 ist im Bereich der zweiten Aussparung 25 eine Anlaufschräge 26 ausgebildet, durch die beim Hochschwenken des zweiten Beschlagteils 20 die zweite Achse 13 angehoben und geführt wird, bis sie aufgrund der Federkraft der Zugfeder 14 in die zweite Aussparung 25 einrastet, wodurch die beiden Beschlagteile 10, 20 miteinander verbunden werden.

Der Vorgang des Einrastens der zweiten Achse 13 in die zweite Aussparung 25 ist in den Fig. 5a-5e detaillierter dargestellt. Die Fig. 5a-5e zeigen jeweils den Möbelbeschlag mit dem ersten Beschlagteil 10 und dem zweiten Beschlagteil 20 in einer schematischen Seitendarstellung.

In Fig. 5a ist das zweite Beschlagteil 20 mit der ersten Aussparung 24 auf die überstehenden Enden der ersten Achse 12 aufgesetzt und so weit hochgeschwenkt, dass die Anlaufschräge 26 an der zweiten Achse 13 anliegt. Die zweite Achse 13 befindet sich, beaufschlagt mit der Federkraft der Zugfeder 14, in ihrer Grundstellung (vgl. Fig. 3 und 4) am unteren Ende des Langlochs 113.

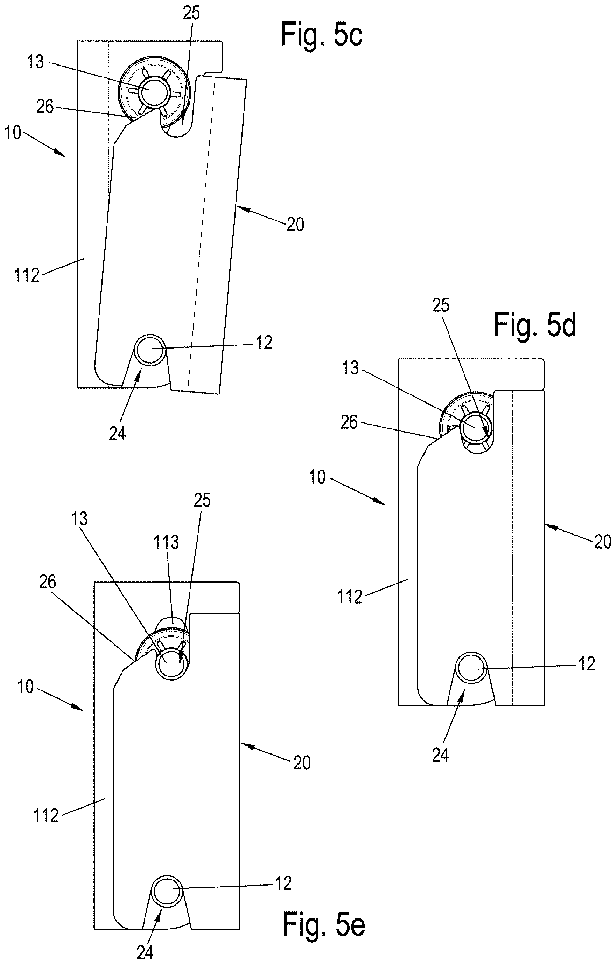

Wird durch entsprechende Schwenkbewegung des mit dem zweiten Beschlagteil 20 verbundenen Möbelteils das zweite Beschlagteil 20 weiter auf das erste Beschlagteil 10 zugeschwenkt, wird die zweite Achse 13 durch die Anlaufschräge 26 innerhalb des Langlochs 113 nach oben angehoben. Dieses ist in zwei verschiedenen Stadien in den Fig. 5b und 5c dargestellt.

Bei weiterem Verschwenken des zweiten Beschlagteils 20 gegenüber dem ersten Beschlagteil 10 wird schließlich der Sattelpunkt zwischen der Anlaufschräge 26 und der zweiten Aussparung 25 unter der zweiten Achse 13 hindurchgeschoben, wodurch die zweite Achse 13 durch die Zugfeder 14 in die zweite Aussparung 25 hineingezogen wird.

Bedingt durch die kreisrunde Form der zweiten Achse 13 zieht dabei die Zugfeder 14 das zweite Beschlagteil 20 an das erste Beschlagteil 10 heran und unterstützt so zusätzlich die Schwenkbewegung des zweiten Beschlagteils 20, sobald die Mittelsenkrechte der zweiten Achse 13 den Sattelpunkt zwischen der Anlaufschräge 26 und der Kante der zweiten Aussparung 25 überwunden hat.

Die sich an den Sattelpunkt anschließende Kante der zweiten Aussparung 25 kann zudem gegenüber der Basis 21 des zweiten Beschlagteils 20 leicht geneigt verlaufen. Beim Einrasten des Beschlags bis zu der Position, in der die Basis 21 des zweiten Beschlagteils 20 auf den Kanten der Schenkel 112 des ersten Beschlagteils 10 aufliegt, verbleibt dann die Achse 13 in der in Fig. 5d dargestellten Position. Wenn im Laufe der Benutzung des Möbels große Kräfte auf den Möbelbeschlag wirken und gegebenenfalls beispielsweise die Seitenkanten des Langlochs 113 leicht verformt werden, kann die zweite Achse 13 im Langloch 113 weiter herunterwandern. So wird das entstandene Spiel im Möbelbeschlag ausgeglichen, bis schließlich die in Fig. 5e dargestellte endgültige Rastposition der zweiten Achse 13 erreicht ist.

In alternativen Ausgestaltungen des Möbelbeschlags kann vorgesehen sein, die zweite Aussparung 24 so anzuordnen und zu formen, dass die zweite Achse 13 bereits bei einer ersten Benutzung des Möbelbeschlags in der in Fig. 5e dargestellten Position einrastet.

Die Verbindung der beiden Beschlagteile 10, 20 kann große Kräfte in alle Raumrichtungen aufnehmen und ist insbesondere auch geeignet, zwischen dem ersten und dem zweiten Beschlagteil 10, 20 wirkende Drehmomente aufzunehmen. Selbst ein Anheben des zweiten Beschlagteils 20 gegenüber dem ersten Beschlagteil 10, durch das die zweite Achse 13 im Langloch 113 angehoben wird, führt nicht zu einem Trennen der beiden Beschlagteile 10, 20, da die zweite Achse 13 in der weniger tiefen zweiten Aussparung 25 verbleibt und der Bewegungshub der zweiten Achse 13 im Langloch 113 nicht ausreicht, um die erste Achse 12 aus der tieferen ersten Aussparung 24 gleiten zu lassen.

Ein Lösen der Rastverbindung kann erfolgen, indem die zweite Achse 13 gegen die Kraft der Zugfeder 14 innerhalb der Langlöcher 113 angehoben wird und das zweite Beschlagteil 20 in umgekehrter Richtung, wie es die Sequenz der Fig. 5a-5e zeigt, gegenüber dem ersten Beschlagteil 10 zurückgeschwenkt wird. Nach dem Ausschwenken des zweiten Beschlagteils 20 kann dieses zum Trennen der beiden Beschlagteile 10, 20 von der ersten Achse 12 abgehoben werden.

Das zum Trennen notwendige Anheben der zweiten Achse 13 wird durch das Entriegelungsblech 15 erleichtert. Es kann entweder ein Druck auf die untere Entriegelungslasche 155 oder ein Zug auf die obere Entriegelungslasche 156 ausgeübt werden, um das Entriegelungsblech 15 innerhalb des u-förmigen Grundelements 11 nach oben zu schieben und damit die zweite Achse 13 anzuheben. Das Entriegelungsblech 15 verhindert dabei eine Schrägstellung der zweiten Achse 13, auch wenn die Entriegelungslaschen 155, 156 nicht genau mittig ober- bzw. unterhalb des Angriffspunkts der Zugfeder 14 an der zweiten Achse 13 betätigt werden.

In alternativen Ausgestaltungen kann alternativ und/oder zusätzlich zum Entriegelungsblech 15 ein Band an der zweiten Achse 13 angebracht sein, das innerhalb des Polsterspalts gegriffen werden kann und an dem die zweite Achse 13 in die obere Entriegelungsposition gezogen werden kann.

Im dargestellten Ausführungsbeispiel ist die Zugfeder 14 durch die umlaufenden Nuten 121, 131 an den Achsen 12, 13 in ihrer Position relativ zu den Achsen 12, 13 festgelegt. Zusätzlich erfolgt eine Festlegung der Seitenposition der Zugfeder 14 durch Führungslaschen 154 (siehe Fig. 3), die aus dem Entriegelungsblech 15 herausgestellt sind. In einer alternativen Ausgestaltung kann eine seitliche Fixierung der Zugfeder 14 ausschließlich durch die Führungslaschen 154 erfolgen, sodass auf die umlaufenden Nuten 121,131 in den Achsen 12, 13 verzichtet werden kann.

In einer weiteren vorteilhaften Ausbildung des Möbelbeschlags ist vorgesehen, die seitliche Festlegung der Achsen 12, 13 nicht über die aufgesteckten Wellensicherungen 122, 132 zu erzielen, sondern die Achsen 12, 13 durch die Schenkel 112 bzw. 152 zu fixieren. Dabei kann die Bohrung in den Schenkeln 112, durch die die erste Achse 12 geführt ist, bezüglich ihres Durchmessers so ausgeführt sein, dass die Achse 12 eingepresst wird und klemmend in den Schenkeln 112 gehalten wird. Die zweite Achse 13 kann auf vergleichbare Weise klemmend in entsprechend ausgeführten Bohrungen in den Schenkeln 152 des Entriegelungsblechs 15 festgelegt werden.

Weiterhin kann in einer anderen vorteilhaften Ausbildung des Möbelbeschlags auf die Achse 12 verzichtet werden, indem an den Schenkeln 112 des ersten Beschlagteils 10 Durchzüge angeformt sind, die als Aufsteckachsen für die v-förmigen Aussparungen 24 dienen. Als Widerlager für die Öse der Zugfeder 14 kann aus der Basis 150 des ersten Beschlagteils 10 eine Lasche ausgestellt sein.

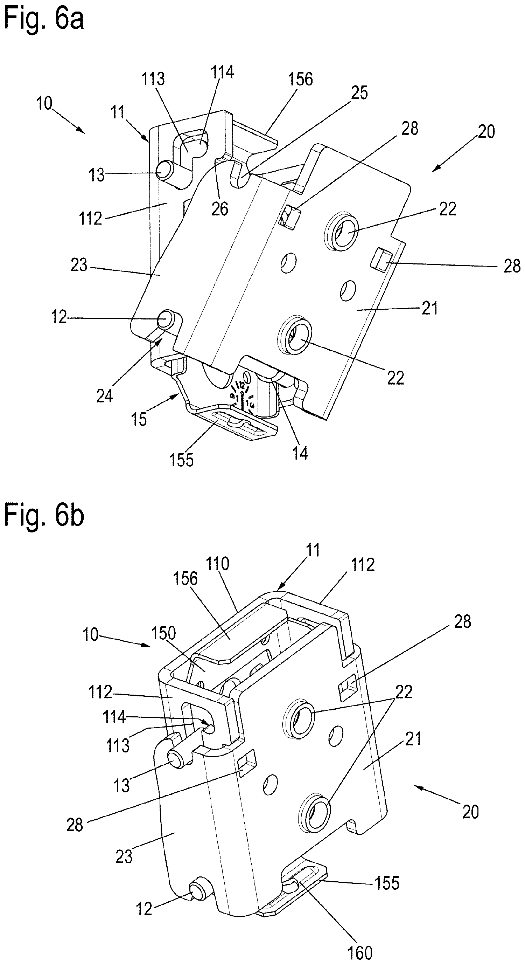

In den Figuren 6-9 ist ein zweites Ausführungsbeispiel eines anmeldungsgemäßen Möbelbeschlags dargestellt. In diesen wie in den folgenden Figuren beziehen sich gleiche Bezugszeichen auf gleiche oder gleichwirkende Elemente wie bei den vorstehend beschriebenen Figuren.

Bezüglich des Grundaufbaus unterscheidet sich der in den Figuren 6-9 dargestellte Möbelbeschlag nicht von dem in den Figuren 3-5 gezeigten. Auf die entsprechende Beschreibung wird hiermit explizit verwiesen.

In den Figuren 6a und 6b ist der Möbelbeschlag in jeweils einer isometrischen Darstellung in zwei unterschiedlichen Stadien eines Verrastungsvorgangs seiner beiden Beschlagteile, des ersten Beschlagteils 10 und des zweiten Beschlagteils 20, dargestellt.

Das erste Beschlagteil 10 weist wiederum ein u-förmiges Grundelement 11 auf, mit einer Basis 110 und Schenkeln 112, durch die beabstandet voneinander eine erste Achse 12 und eine zweite Achse 13 führen, die seitlich über die Schenkel 112 überstehen. Die erste Achse 12 ist dabei ortsfest im Schenkel 112 festgelegt, wohingegen sich die zweite Achse 13 in einem Langloch 113 bewegen kann.

Das zweite Beschlagteil 20 ist ebenfalls u-förmig aufgebaut, mit einer Basis 21 und Schenkeln 23. In den Schenkeln 23 sind wiederum zu Seitenkanten der Schenkel 23 offene erste Aussparungen 24 und zweite Aussparungen 25 angeordnet.

In Fig. 6a ist das zweite Beschlagteil 20 mit den ersten Aussparungen 24 auf die erste Achse 12 aufgesetzt. Wie in der Abfolge der Figuren 5a-5e im Zusammenhang mit dem ersten Ausführungsbeispiel des Möbelbeschlags dargestellt ist, kann das zweite Beschlagteil 20 durch Verschwenken um die erste Achse 12 mit dem ersten Beschlagteil 10 verrastet werden, indem beim Schwenken des zweiten Beschlagteils 20 die zweite Achse 13 durch die Anlaufschräge 26 in den Langlöchern 113 von der ersten Achse 12 wegbewegt wird und dann federkraftbeaufschlagt in die zweite Aussparung 25, die auch als Rastmulde bezeichnet ist, einrastet. Die erste Achse 12 und die zweite Achse 13 werden zu diesem Zweck durch in diesem Ausführungsbeispiel zwei Zugfedern 14 aufeinander zubewegt.

Deutlich erkennbar ist, dass die in der Basis 21, in diesem Ausführungsbeispiel mittig angeordneten Befestigungslöcher 22, durch ein Zugdruckumformverfahren mit einem Kragen versehen sind. Damit wird für die Befestigungsmittel, insbesondere Schrauben, über die das zweite Beschlagteil 20 an einem Möbelteil festgelegt wird, eine bessere Zentrierung und Führung erzielt, z.B auch durch die Anlage einer konischen Schraubenkopfunterseite.

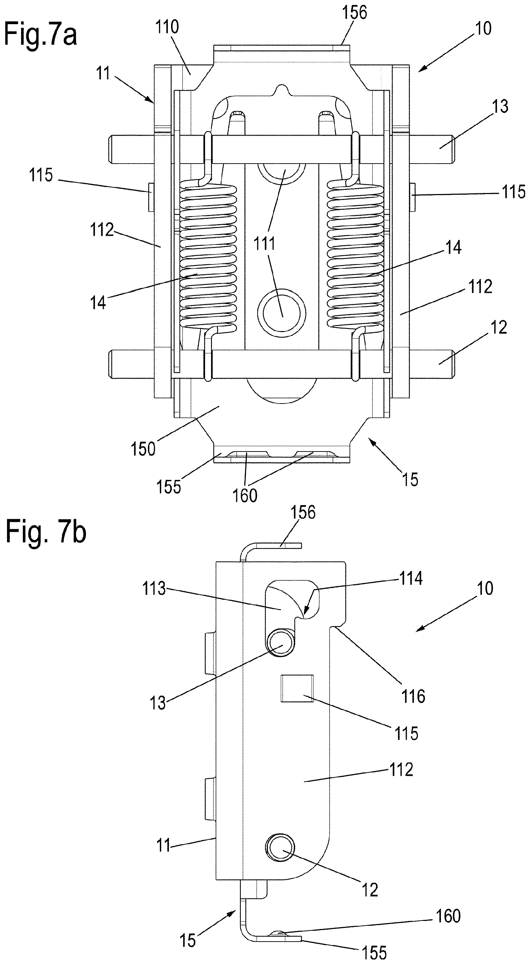

In den Figuren 7a und 7b ist das erste Beschlagteil 10 separat in einer Vorderansicht bzw. einer Seitenansicht wiedergegeben. Die Verwendung von zwei Zugfedern 14 statt einer Zugfeder im ersten Ausführungsbeispiel des Möbelbeschlags, die hier näher zu den Schenkeln 112 angeordnet sind, ermöglicht den Einsatz höherer Federkräfte, mit der die beiden Achsen 12, 13 aufeinander zubewegt werden, ohne dass dieses zu einer möglichen Verbiegung der Achsen 12, 13 führt. Bedingt durch die Verwendung der zwei Zugfedern 14 sind die Befestigungslöcher 111 im Grundelement 11 entlang einer Mittelachse des ersten Beschlagteils 10 angeordnet. In Fig. 7b ist sichtbar, dass eine Längskante zumindest eines Schenkel 112 weist an dem Ende, wo das Langloch 113 eingebracht ist, einen Vorsprung 116 auf, der ein paralleles Verschieben des zweiten Beschlagteiles 20 zur Basis 110 im zusammengefügten Zustand im Sinne eines Anschlags für die Basis 21, wie auch schon beim ersten Ausführungsbeispiel in den Figuren 3-5 dargestellt, verhindern soll.

Ein weiterer Unterschied des vorliegenden ersten Beschlagteils 10 gegenüber dem ersten Ausführungsbeispiel liegt in der Formgebung des Langlochs 113. Dieses verläuft beim vorliegenden Ausführungsbeispiel L-förmig mit einem längeren Abschnitt, der wie im ersten Ausführungsbeispiel parallel zur Basis 110 des Grundelements 11 ausgerichtet ist, und einen kürzeren Abschnitt, der quer - insbesondere senkrecht - zum längeren Abschnitt verläuft. Der quer verlaufende Abschnitt liegt auf der der ersten Achse 12 abgewandten Seite des Langlochs 113.

Der quer verlaufende Abschnitt des Langlochs 113 ermöglicht nach Anheben der zweiten Achse 13 (bezogen auf die Ausrichtung des ersten Beschlagteils 10 in der Darstellung der Figuren 6 und 7) eine Bewegung der zweiten Achse 13 von der Basis 110 weg. An der unteren, zu der ersten Achse 12 hinweisenden Seite des quer verlaufenden Abschnitts des Langlochs 113 ist eine Ablageposition 114 in Form einer Mulde ausgebildet. In dieser Ablageposition 114 kann die zweite Achse 13 abgelegt werden. Sie verweilt stabil in dieser Ablageposition 114, da sie durch die Zugfedern 14 in die muldenförmige Ablageposition 114 gezogen wird.

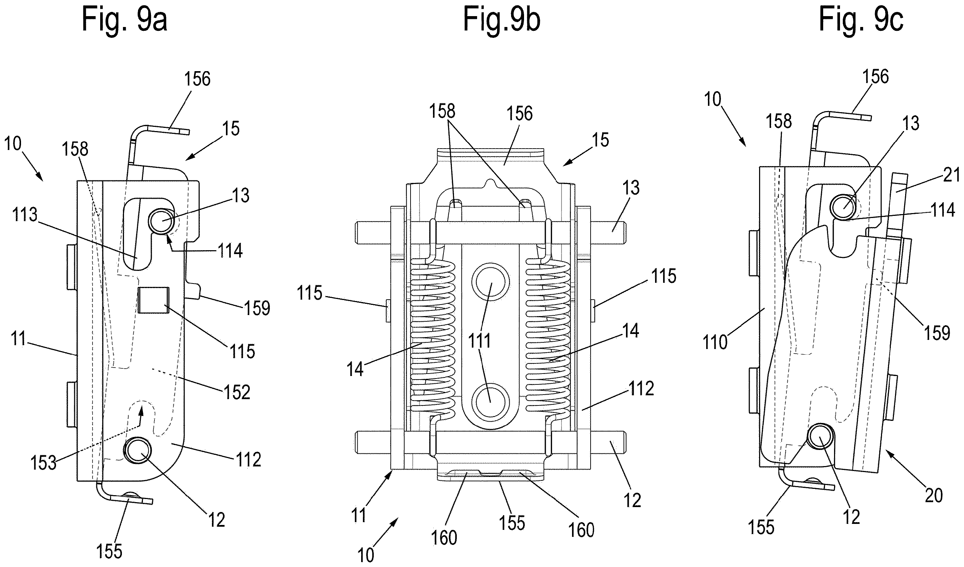

Diese Ausgestaltung des Langlochs 113 in Verbindung mit der Ablageposition 114 ermöglicht es, das Beschlagteil 10 in einen vorgespannten Zustand zu bringen, wodurch das Verrasten mit dem zweiten Beschlagteil 20 vereinfacht wird. Dieses wird im Zusammenhang mit den Figuren 9a-9c näher erläutert. Jeder Schenkel 112 ist jeweils mit mindestens einer Prägung 115, beispielsweise in Form einer Sicke, versehen, um bei dem Zusammenfügen des ersten Beschlagteils 10 mit dem zweiten Beschlagteil 20 eine Zentrierung und ein vorbestimmtes Spaltmaß dieser beiden Beschlagteile 10, 20 zu erreichen.

Des Weiteren sind außen auf der Basis 21 des zweiten Beschlagteils 20 zwei Ausnehmungen 28 erkennbar, die hier rechteckförmig bzw. quadratisch ausgebildet sind, aber auch andere Formen aufweisen können. Deren Funktion wird im Zusammenhang mit den Figuren 9a bis 9c näher beschrieben.

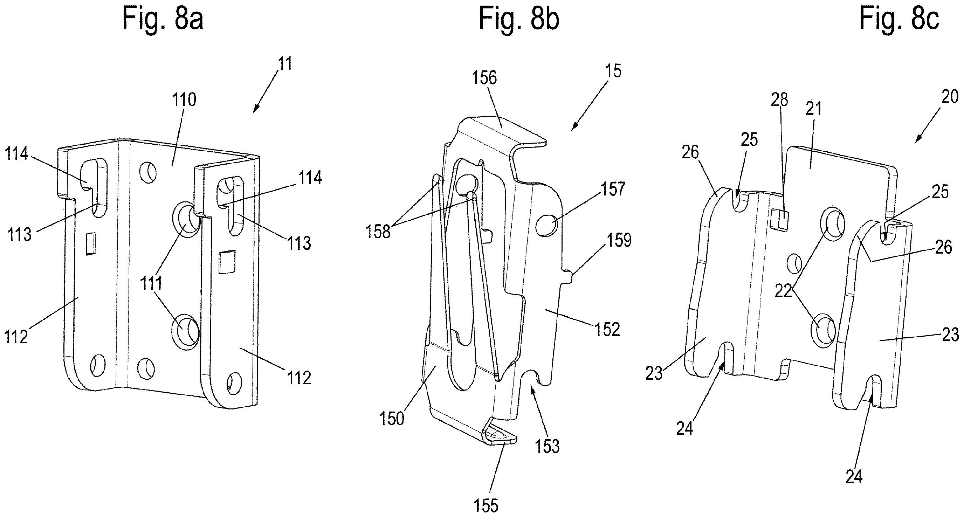

Zunächst sind in den Figuren 8a-8c das Grundelement 11, das Entriegelungsblech 15 und das zweite Beschlagteil 20 nochmals separat in jeweils einer isometrischen Darstellung wiedergegeben.

Das in Fig. 8b gezeigte Entriegelungsblech 15 ist ebenfalls u-förmig aufgebaut mit einer Basis 150 und senkrecht dazu stehenden seitlichen Schenkeln 152. Im oberen bzw. unteren Teil (bezogen auf die Darstellung in der Fig. 8b) sind - wiederum wie beim ersten Ausführungsbeispiel - Entriegelungslaschen 155, 156 abgewinkelt. An den Entriegelungslaschen 155, 156 kann durch Druck oder Zug das Entriegelungsblech 15 und mit diesem die zweite Achse 13 manuell bewegt werden, um das zweite Beschlagteil 20 vom ersten Beschlagteil 10 lösen zu können. Die zweite Achse 13 ist dabei durch Löcher 157 in den Schenkeln 152 geführt. Die zweite Achse 13 hat in den Löchern 157 nur wenig Spielraum, sodass sie sich im Wesentlichen mit dem Entriegelungsblech 15 bewegt. Für die erste Achse 12 sind Aussparungen 153 in den Schenkeln 152 vorgesehen, die eine Bewegung des Entriegelungsblechs 15 gegenüber der feststehenden Achse 12 ermöglichen.

Im Unterschied zu dem Entriegelungsblech 15 des ersten Ausführungsbeispiels sind vorliegend zwei Federelemente 158 vorhanden, die zumindest den oberen Bereich des Entriegelungsblechs 15, also den Bereich, in dem die zweite Achse 13 durch die Löcher 157 geführt ist, federkraftbeaufschlagt von der Basis 110 des Grundelements 11 wegbewegen. Auf diese Weise wird eine im Langloch 113 gegen die Zugkraft der Zugfedern 14 angehobene (d.h. von der ersten Achse 12 wegbewegte) zweite Achse 13 in den quer verlaufenden Abschnitt des Langlochs 113 gedrückt, sodass sie beim Absenken der zweiten Achse 13 in der Ablageposition 114 abgelegt wird. Die beiden Federelemente 158 sind beim gezeigten Ausführungsbeispiel durch Federzungen gebildet, die aus der Basis 150 des Entriegelungsblechs 15 ausgestellt sind.

Weiterhin ist an der Längskante jedes Schenkels 152 eine hervorstehende Nase 159 ausgebildet, deren Funktion ebenfalls im Zusammenhang mit den Figuren 9 a-c erläutert wird.

An der Entriegelungslasche 155 sind in diesem Ausführungsbeispiel zwei Prägungen 160 ausgebildet, die für die Zentrierung einer Entriegelungshilfe, beispielsweise eines Schraubendrehers, hilfreich sind. Diese Prägungen 160 können natürlich auch an der Entriegelungslasche 156 ausgebildet sein.

In den Figuren 9a und 9b ist das erste Beschlagteil 10 des Möbelbeschlags des zweiten Ausführungsbeispiels mit der zweiten Achse 13 in der Ablageposition 114 in einer Seitenansicht (Fig. 9a) bzw. einer Vorderansicht (Fig. 9b) dargestellt. In der Seitenansicht der Fig. 9a sind dabei verdeckte Linien des Entriegelungsblechs 15 gestrichelt dargestellt, um die Anordnung des Entriegelungsblechs 15 in dieser Rastposition zu verdeutlichen. In dieser Darstellung ist gut zu erkennen, wie sich die Enden der als ausgestellte Federzungen ausgebildeten Federelemente 158 an der Basis 110 des Grundelements 11 abstützen. Weiter ist in der Seitenansicht gut zu erkennen, dass die Nase 159 über die Längskante des Schenkels 112 des Grundelements 11 hervorsteht.

Fig. 9b zeigt, dass in dieser vorgespannten Position der zweiten Achse 13 in der Ablageposition 114 die beiden Befestigungslöcher 111 frei zugänglich sind. Ein Vergleich mit Fig. 7a lässt erkennen, dass dieses in der Grundposition der zweiten Achse 13 nicht der Fall ist. Durch die Möglichkeit, die zweite Achse 13 in der Ablageposition 114 abzulegen, können somit die Befestigungslöcher 111 bei gleicher Baugröße des ersten Beschlagteils 10 weiter voneinander beabstandet werden. Weiter voneinander beabstandete Befestigungslöcher und damit auch weiter voneinander beabstandete Befestigungsmittel, die durch die Befestigungslöcher 111 geführt sind, erfahren geringere Kräfte bei einem auf den Möbelbeschlag wirkenden Kippmoment.

Fig. 9c zeigt das erste Beschlagteil 10 in einer Seitenansicht mit angesetztem zweiten Beschlagteil 20. Das zweite Beschlagteil 20 ist mit seiner ersten Aussparung 24 in dieser Darstellung bereits auf die erste Achse 12 aufgesetzt und im oberen Bereich an das erste Beschlagteil 10 herangeschwenkt. In der dargestellten Schwenklage liegt das zweite Beschlagteil 20 mit seiner Basis 21 an der Nase 159 an. Ein weiteres Schwenken des zweiten Beschlagteils 20 aus dieser Position heraus führt zu einem Mitbewegen des Entriegelungsblechs 15 auf die Basis 110 des Grundelements 11 zu. Durch die Mitbewegung des Entriegelungsblechs 15 wird auch die zweite Achse 13 auf die Basis 110 zu bewegt und damit aus der muldenförmigen Ablageposition 114 geschoben. Als Folge gelangt die zweite Achse 13 in den vertikal verlaufenden Abschnitt des Langlochs 113 und wird durch die Zugfedern 14 in die als Rastmulde ausgebildete zweite Aussparung 25, des zweiten Beschlagteils 20 gezogen. Beide Beschlagteile 10, 20 sind daraufhin wiederum miteinander verrastet, wie in Fig. 6b dargestellt ist.

Ein Trennen beider Beschlagteile 10, 20 erfolgt dergestalt, dass entweder zunächst auf die Entriegelungslasche 155 gedrückt oder an der Entriegelungslasche 156 gezogen wird, welche jeweils an dem Entriegelungsblech 15 angeordnet sind. Dadurch bewegt sich die am Entriegelungsblech 15 festgelegte zweite Achse 13 aus der unteren Position des vertikal verlaufenden Abschnitts des Langlochs 113 und wird infolge der Federkraft der Federelemente 158 an das Ende des quer verlaufenden Abschnitts des L-förmigen Langlochs 113. Nahezu gleichzeitig mit dem Erreichen dieser Position fassen die Nasen 159 des Entriegelungsblechs 15 in die Ausnehmungen 28 des zweiten Beschlagteils 20. Dabei kommen die unteren Kanten der Nasen 159 zur Anlage auf den unteren Flächen der Ausnehmungen 28. Infolgedessen wird verhindert, dass die zweite Achse 13 wieder eine andere Position in der Vertikalstellung einnehmen kann. Nun kann das zweite Beschlagteil 20 gänzlich durch ein weiteres Verschwenken von dem ersten Beschlagteil 10 und dem Entriegelungsblech 15 getrennt werden, wodurch die als Rastachse wirkende zweite Achse 13 in die Ablageposition 114 verbracht wird und hier zur Anlage kommt.

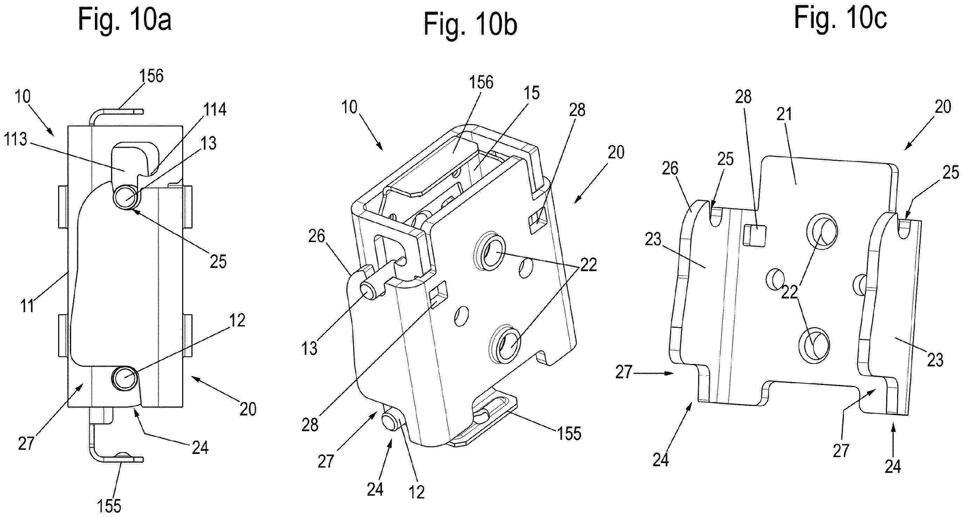

In den Figuren 10a-10c ist ein drittes Ausführungsbeispiel eines anmeldungsgemäßen Möbelbeschlags dargestellt. Bis auf die nachfolgend erläuterten Unterschiede entspricht dieser Möbelbeschlag dem des zweiten Ausführungsbeispiels, auf dessen Beschreibung hiermit verwiesen wird.

Fig. 10a zeigt den Möbelbeschlag mit miteinander verrasteten ersten und zweiten Beschlagteilen 10, 20 in einer Seitendarstellung. In Fig. 10b ist der Möbelbeschlag in einer isometrischen Darstellung wiedergegeben.

Das erste Beschlagteil 10 ist bei diesem Möbelbeschlag baugleich mit dem ersten Beschlagteil des Möbelbeschlags des zweiten Ausführungsbeispiels. Beide Ausführungsbeispiele unterscheiden sich jedoch im zweiten Beschlagteil 20, das in Fig. 10c separat in einer isometrischen Darstellung wiedergegeben ist.

Bei diesem zweiten Beschlagteil 20 ist die erste Aussparung 24 nicht nur nach unten hin zur Seitenkante der Schenkel 23 geöffnet, sondern durch einen Freischnitt 27 auch zur Längskante der Schenkel 23 hin. Als Folge kann das zweite Beschlagteil 20 nicht nur auf die Achse 12 aufgesetzt und zum Verrasten eingeschwenkt werden, sondern kann auch in einer linearen Verschiebebewegung, bei der die Basis 21 des zweiten Beschlagteils 20 im Wesentlichen parallel zur Basis 110 des Grundelements 11 ausgerichtet bleibt, mit dem ersten Beschlagteil 10 verrastet werden.

Dieses ist grundsätzlich möglich, wenn sich die zweite Achse 13 zu Beginn des Rastvorgangs in der Grundstellung befindet und im unteren Ende des vertikal verlaufenden Abschnitts des Langlochs 113 positioniert ist. Bevorzugt wird ein Verrasten durch die geschilderte Verschiebebewegung jedoch vorgenommen, wenn sich die zweite Achse 13 in der Ablageposition 114 befindet. In diesem Fall kann das zweite Beschlagteil 20 nahezu kraftlos auf das erste Beschlagteil 10 zubewegt werden, wobei die Verrastung wiederum erfolgt, sobald das Entriegelungsblech 15 über die Nase 159 vom zweiten Beschlagteil 20 mitbewegt wird.

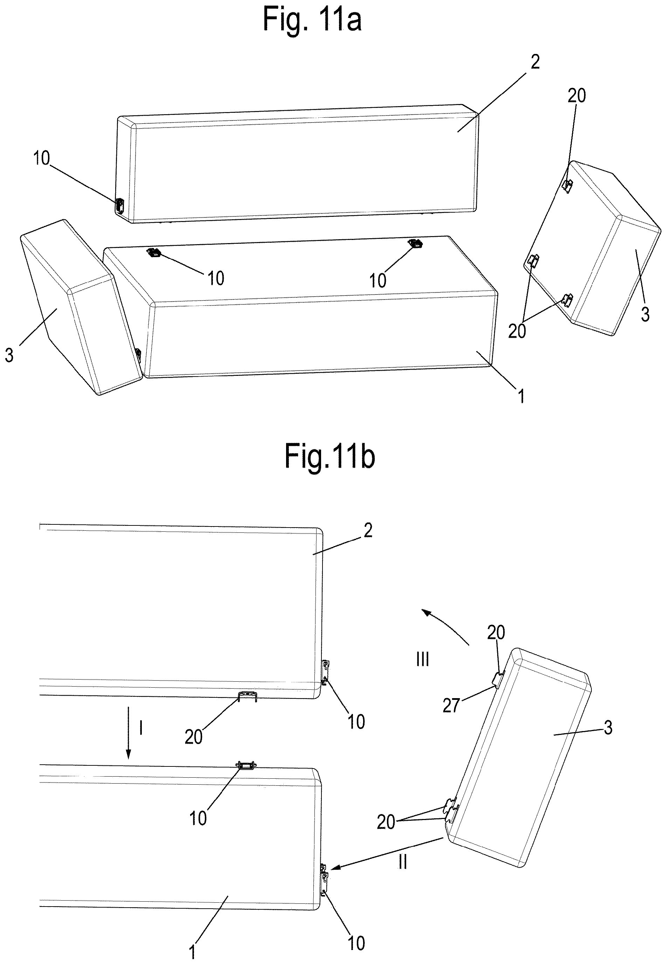

In der Fig.11 a ist, vergleichbar mit der Fig.1, ein Sofa als Beispiel eines Möbels dargestellt, dessen einzelne Möbelteile mithilfe der anmeldungsgemäßen Beschläge zusammengefügt werden. Konkret weist das Sofa ein Sitzteil 1, eine Rückenlehne 2 und jeweils seitliche Armstützen 3 auf.

Zwischen dem Sitzteil 1 und der Rückenlehne 2 sind vorliegend beispielhaft zwei Möbelbeschläge vorgesehen, jeweils mit erstem Beschlagteil 10 und zweitem Beschlagteil 20. Jede der Armstützen 3 wird mit drei Möbelbeschlägen mit dem Sitzteil 1 bzw. der Rückenlehne 2 verbunden, wobei vorliegend jeweils zwei Möbelbeschläge, die in einer Linie angeordnet sind, jede Armstütze 3 mit dem Sitzteil 1 verbinden. Jeweils ein weiterer Möbelbeschlag legt jede Armstütze 3 an der Rückenlehne 2 fest.

Fig. 11b zeigt die Reihenfolge des Zusammensetzens des in Fig. 11 a dargestellten Möbels. Zunächst wird, wie durch einen Bewegungspfeil I dargestellt ist, die Rückenlehne 2 mit dem Sitzteil 1 verbunden. Die hierzu verwendeten Möbelbeschläge sind bevorzugt gemäß dem ersten oder zweiten Ausführungsbeispiel ausgebildet, wobei die Rückenlehne 2 zunächst so angesetzt wird, dass die ersten Aussparungen 24 der zweiten Beschlagteile 20, die als Einhängemulden ausgebildet sind, auf die erste Achse 12 des ersten Beschlagteils 10 aufgesetzt werden und dann durch Schwenkbewegung der Rückenlehne 2 die zweiten Beschlagteile 20 mit den ersten Beschlagteilen 10 verrasten.

In einem zweiten Schritt, dargestellt durch den Bewegungspfeil II, werden die ebenfalls gemäß dem ersten oder zweiten Ausführungsbeispiel ausgebildeten zweiten Beschlagteile 20, die im unteren Abschnitt der Armstützen 3 angeordnet sind, in die entsprechenden ersten Beschlagteile 10, die am Sitzteil 1 angeordnet sind, eingehakt.

Danach wird, wie durch den Bewegungspfeil III angedeutet ist, die jeweilige Armstütze 3 an die Rückenlehne 2 geschwenkt. Bei diesem Verschwenken verrasten die beiden unteren Möbelbeschläge. Der obere Möbelbeschlag weist an der Armstütze 3 ein zweites Beschlagteil 20 mit Freischnitt 27 der ersten Aussparung 24 auf. Die Schwenkbewegung der Armstütze 3 in Richtung auf die Rückenlehne 2, führt im Wesentlichen zu einer Verschiebebewegung der beiden Beschlagteile 10, 20 aufeinander zu, was durch Verwendung des zweiten Beschlagteils 20 mit Freischnitt 27 möglich ist und zu einem Verrasten dieser beiden Beschlagteile 10, 20 führt.

Im Unterschied zu dem in den Figuren 1 und 2 dargestellten Bespiel ist es durch Verwendung des zweiten Beschlagteils 20 mit Freischnitt 27 möglich, die Armstützen 3 nicht nur mit dem Sitzteil 1, sondern auch mit der Rückenlehne 2 zu verbinden. Allgemein ermöglicht das zweite Beschlagteil 20 mit Freischnitt 27 die Verwendung mehrerer Möbelbeschläge zur Verbindung zweier Möbelteile, auch wenn diese Möbelbeschläge nicht entlang einer Linie angeordnet sind.

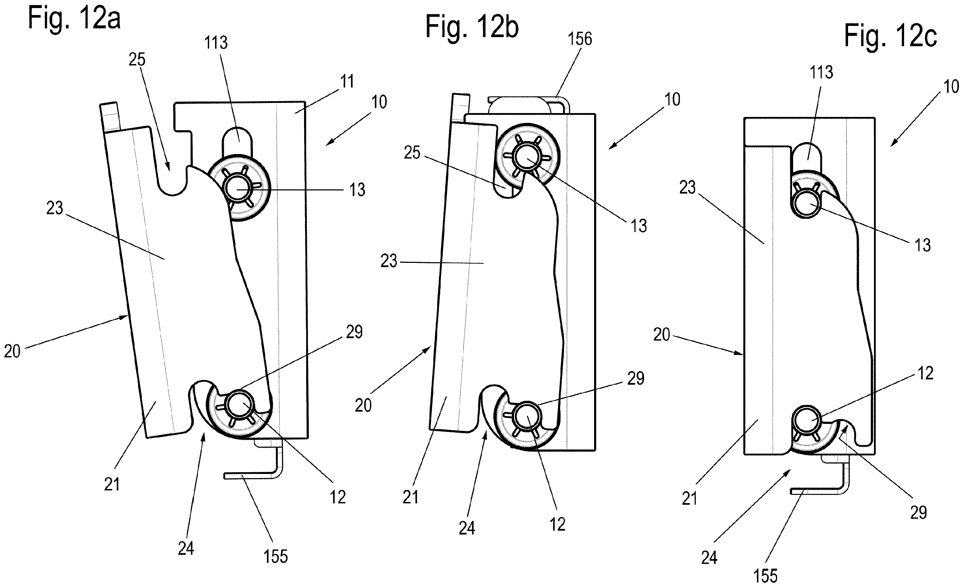

In den Figuren 12a-c ist ein viertes Ausführungsbeispiel eines anmeldungsgemäßen Möbelbeschlags dargestellt. Bis auf die nachfolgend erläuterten Unterschiede entspricht dieser Möbelbeschlag dem des ersten Ausführungsbeispiels, auf dessen Beschreibung hiermit verwiesen wird. Insbesondere kann das erste Beschlagteil 10 bei dem hier gezeigten Möbelbeschlag baugleich mit dem ersten Beschlagteil des Möbelbeschlags des ersten Ausführungsbeispiels sein. Beide Ausführungsbeispiele unterscheiden sich jedoch im zweiten Beschlagteil 20.

Die Figuren 12a-c zeigen jeweils eine Seitenansicht des Möbelbeschlags, wobei das zweite Beschlagteil 20 in verschiedenen Stadien des Zusammenfügens beider Beschlagteile 10, 20 gezeigt ist.

Die Figur 12a zeigt das zweite Beschlagteil 20 aufgesetzt auf die erste Achse 12 des ersten Beschlagteils 10. Das Beschlagteil 20 unterscheidet sich von den bisher beschriebenen darin, dass die erste Aussparung 24 neben der eigentlichen Einhängemulde eine dieser vorgelagerte Mulde 29 aufweist, die ein Ansetzen des zweiten Beschlagteils 20 in der in Figur 12a gezeigten Stellung ermöglicht. Die Mulde 29 ist weiter von der Basis 21 beabstandet, als die Einhängemulde. Der Winkel, unter dem das zweite Beschlagteil 20 verkippt gegenüber dem ersten Beschlagteil 10 auf die erste Achse 12 aufgesetzt werden kann, ist durch diese vorgelagerte Mulde 29 weniger groß, als wenn die erste Achse 12 direkt in die Einhängemulde eingelegt wird.

Figur 12b zeigt den Möbelbeschlag nach Heranschwenken des in der Figur oberen Bereichs des zweiten Beschlagteils 20 an das erste Beschlagteil 10. Nachdem dieses erfolgt ist und entsprechend die zweite Achse 13 im Langloch 113 gegen die Zugkraft der hier nicht sichtbaren Zugfedern hochgedrückt ist, wird das zweite Beschlagteil 20 im unteren Bereich an das erste Beschlagteil 10 herangedrückt, wie dieses in Figur 12c dargestellt ist. Die erste Achse 12 verlässt durch dieses Herandrücken die zusätzliche vorgelagerte Mulde 29 und das zweite Beschlagteil 20 rutscht in seine endgültige Position, in der die erste Achse 12 in der Einhängemulde positioniert ist. Die zweite Achse 13 rastet wie bei den vorherigen Ausführungsbeispielen in der zweiten Aussparung 25 ein, wodurch die beiden Beschlagsteile 10, 20 vollständig miteinander verrastet sind.

### Bezugszeichen

- 1: Sitzteil
- 2: Rückenlehne
- 3: Armstütze

- 10: erstes Beschlagteil
- 11: Grundelement
- 110: Basis
- 111: Befestigungsloch
- 112: Schenkel
- 113: Langloch
- 114: Ablageposition
- 115: Prägung
- 116: Vorsprung

- 12: erste Achse (Einhängeachse)
- 121: umlaufende Nut
- 122: Wellensicherung

- 13: zweite Achse (Rastachse)
- 131: umlaufende Nut
- 132: Wellensicherung

- 14: Zugfeder

- 15: Entriegelungsblech
- 150: Basis
- 151: Öffnung
- 152: Schenkel
- 153: Aussparung
- 154: Führungslasche
- 155: Entriegelungslasche (Druck)
- 156: Entriegelungslasche (Zug)
- 157: Loch
- 158: Federelement
- 159: Nase
- 160: Prägung
- 20: zweites Beschlagteil
- 21: Basis
- 22: Befestigungsloch
- 23: Schenkel
- 24: erste Aussparung (Einhängemulde)
- 25: zweite Aussparung (Rastmulde)
- 26: Anlaufschräge
- 27: Freischnitt
- 28: Ausnehmung
- 29: Mulde

## Patentansprüche

1. Möbelbeschlag zur Verbindung von Möbelteilen, insbesondere von Polstermöbeln, mit einem an einem ersten Möbelteil befestigbaren ersten Beschlagteil (10) und einem an einem zweiten Möbelteil befestigbaren zweiten Beschlagteil (20), **dadurch gekennzeichnet, dass**
- das erste Beschlagteil (10) eine Basis (110) aufweist und zwei parallel zueinander und parallel zu der Basis angeordnete Achsen (12, 13), wobei
- eine erste der Achsen (12) fest mit dem ersten Beschlagteil (10) verbunden ist und eine zweite der Achsen (13) relativ zu der ersten Achse (12) in einer Richtung senkrecht zu den Achsen (12, 13) gegen eine Kraft eines Kraftspeichers verschiebbar gelagert ist, und
- das zweite Beschlagteil (20) eine erste und eine zweite Aufnahme für die erste bzw. zweite Achse (12, 13) aufweist, wobei das zweite Beschlagteil (20) mit der ersten Aufnahme auf die erste Achse (12) aufsetzbar und um die erste Achse (12) verschwenkbar ist und die zweite Achse (13) beim Verschwenken in die zweite Aufnahme einrastet, um die beiden Beschlagteile (10, 20) miteinander zu verbinden.

2. Möbelbeschlag nach Anspruch 1, bei dem das erste Beschlagteil (10) ein u-förmiges Grundelement (11) aufweist, das die Basis (110) und zwei Schenkel (112) umfasst, wobei die Achsen (12, 13) die Schenkel (112) durchdringen und jeweils zu beiden Seiten über äußere Flächen der Schenkel (112) herausragen.

3. Möbelbeschlag nach Anspruch 2, bei dem an mindestens einem der Schenkel (112) des Grundelements (11) des ersten Beschlagteils (10) ein Vorsprung (116) ausgebildet ist, der ein paralleles Verschieben des zweiten Beschlagteiles (20) zum Grundelement (11) im zusammengefügten Zustand des Möbelbeschlags verhindert.

4. Möbelbeschlag nach Anspruch 2 oder 3, bei dem das zweite Beschlagteil (20) u-förmig mit einer Basis (21) und Schenkeln (23) ausgebildet ist, wobei die erste Aufnahme durch jeweils eine erste Aussparung (24) in den Schenkeln (23) gebildet ist und die zweite Aufnahme durch jeweils eine gegenüberliegende zweite Aussparung (25) in den Schenkeln (23).

5. Möbelbeschlag nach Anspruch 4, bei dem die erste Aussparung (24) und die zweite Aussparung (25) jeweils an gegenüberliegenden Seitenkanten des Schenkels (23) angeordnet sind und jeweils in Richtung der Seitenkante offen sind.

6. Möbelbeschlag nach Anspruch 5, bei dem die erste Aussparung (24) sich zur Seitenkante des Schenkels (23) hin v-förmig verbreitert.

7. Möbelbeschlag nach Anspruch 5 oder 6, bei dem an einer der Basis (21) abgewandten Seite der ersten Aussparung (24) eine zusätzliche Mulde (29) ausgebildet ist.

8. Möbelbeschlag nach Anspruch 5 oder 6, bei dem die erste Aussparung (24) in Richtung der Längskante des Schenkels (23) freigeschnitten ist.

9. Möbelbeschlag nach einem der Ansprüche 4 bis 8, bei dem an einer freien Längsseite des jeweiligen Schenkels (23) im Bereich der zweiten Aussparung (25) eine Anlaufschräge (26) für die zweite Achse (13) vorhanden ist.

10. Möbelbeschlag nach einem der Ansprüche 2 bis 9, bei dem die zweite Achse (13) in Langlöchern (113) in den Schenkeln (112) verschiebbar geführt ist.

11. Möbelbeschlag nach einem der Ansprüche 1 bis 10, bei dem der Kraftspeicher mindestens eine Zugfeder (14) ist, die an der ersten und der zweiten Achse (12, 13) angreift.

12. Möbelbeschlag nach einem der Ansprüche 2 bis 11, bei dem in das Grundelement (11) ein ebenfalls u-förmiges Entriegelungsblech (15) mit einer Basis (150) und Schenkeln (152) eingelegt ist, das durch seine Schenkel (152) mit der zweiten Achse (13) verbunden ist und gegenüber der ersten Achse (12) und dem Grundelement (11) verschiebbar ist.

13. Möbelbeschlag nach Anspruch 12, bei dem aus der Basis (150) Führungslaschen (154) ausgestellt sind, die eine zumindest seitliche Führung für die Zugfeder (14) bilden.

14. Möbelbeschlag nach Anspruch 12 oder 13, bei dem an zumindest einer rechtwinkelig zu den Schenkeln (152) verlaufenden Seite der Basis (150) des Entriegelungsblech (15) mindestens eine Entriegelungslasche (155, 156) ausgebildet ist.

15. Möbelbeschlag nach einem der Ansprüche 12 bis 14, bei dem die Langlöcher (113) in den Schenkeln (112) des Grundelements (11) L-förmig geformt sind, wobei ein Abschnitt des jeweiligen Langlochs (113) quer zu der Basis (110) des Grundelements (11) verläuft und eine Ablageposition (114) für die zweite Achse (13) in einem gespannten Zustand der mindestens einen Zugfeder (14) bereitstellt.

16. Möbelbeschlag nach Anspruch 15, bei dem das Entriegelungsblech (15) mindestens ein Federelement (158) aufweist, um das Entriegelungsblech (15) zumindest in einem Bereich der zweiten Achse (13) von der Basis (150) des Grundelements (11) wegzudrücken und die zweite Achse (13) in der Ablageposition (114) zu halten und/oder in die Ablageposition (114) zu bewegen.

17. Möbelbeschlag nach Anspruch 16, bei dem das mindestens eine Federelement (158) eine aus der Basis (150) des Entriegelungsblechs (15) ausgestellte Federzunge ist.

18. Möbelbeschlag nach einem der Ansprüche 2 bis 17, bei dem das Grundelement (11) und/oder das Entriegelungsblech (15) und/oder das zweite Beschlagteil (20) aus Blech gefertigt sind, bevorzugt in einem Stanz- und Biegeprozess.

19. Möbel mit mindestens zwei Möbelteilen, **dadurch gekennzeichnet, dass** das Möbel zum Verbinden der mindestens zwei Möbelteile wenigstens einen Möbelbeschlag gemäß einem der Ansprüche 1 bis 18 aufweist.

## Claims

1. A furniture fitting for connecting furniture parts, in particular of upholstered furniture, comprising a first fitting part (10) which can be fastened to a first furniture part and a second fitting part (20) which can be fastened to a second furniture part, **characterized in that**
- the first fitting part (10) has a base (110) and two axles (12, 13) arranged parallel to one another and parallel to the base, wherein
- a first one of the axles (12) is fixedly connected to the first fitting part (10) and a second one of the axles (13) is displaceably mounted relative to the first axle (12) in a direction perpendicular to the axles (12, 13) against a force of an energy storage device, and
- the second fitting part (20) has a first and a second mount for the first and second axle (12, 13), wherein the second fitting part (20) can be positioned on the first axle (12) with the first mount and can be pivoted around the first axle (12), and the second axle (13) latches into the second mount during pivoting in order to connect the two fitting parts (10, 20) to each other.

2. A furniture fitting according to claim 1, wherein the first fitting part (10) has a U-shaped base element (11) comprising the base (110) and two limbs (112), wherein the axles (12, 13) penetrate the limbs (112) and each protrude on either side over outer surfaces of the limbs (112).

3. A furniture fitting according to claim 2, wherein a projection (116) is formed on at least one of the limbs (112) of the base element (11) of the first fitting part (10), said projection allowing a parallel displacement of the second fitting part (20) relative to the base element (11) in the joined state of the furniture fitting.

4. A furniture fitting according to claim 2 or 3, wherein the second fitting part (20) is formed in a U-shaped manner with a base (21) and limbs (23), with the first mount being formed by a respective first recess (24) in the limbs (23) and the second mount being formed in each case by an opposing second recess (25) in the limbs (23).

5. A furniture fitting according to claim 4, wherein the first recess (24) and the second recess (25) are each arranged on opposite side edges of the limb (23) and are respectively open towards the side edge.

6. A furniture fitting according to claim 5, wherein the first recess (24) widens in a V-shaped manner towards the side edge of the limb (23).

7. A furniture fitting according to claim 5 or 6, wherein an additional trough (29) is formed on a side of the first recess (24) facing away from the base (21).

8. A furniture fitting according to claim 5 or 6, wherein the first recess (24) is cut free in the direction of the longitudinal edge of the limb (23).

9. A furniture fitting according to one of the claims 4 to 8, wherein a guide bevel (26) for the second axle (13) is provided on a free longitudinal side of the respective limb (23) in the region of the second recess (25).

10. A furniture fitting according to one of the claims 2 to 9, wherein the second axle (13) is displaceably guided in elongated holes (113) in the limbs (112).

11. A furniture fitting according to one of the claims 1 to 10, wherein the energy storage device is at least one tension spring (14) which acts on the first and the second axle (12, 13).

12. A furniture fitting according to one of the claims 2 to 11, wherein a likewise U-shaped unlatching plate (15) with a base (150) and limbs (152) is inserted into the base element (11) and is connected by its limbs (152) to the second axle (13) and is displaceable against the first axle (12) and the base element (11).

13. A furniture fitting according to claim 12, wherein guide tabs (154) protrude from the base (150), which form an at least lateral guide for the tension spring (14).

14. A furniture fitting according to claim 12 or 13, wherein at least one unlatching tab (155, 156) is formed on at least one side of the base (150) of the unlatching plate (15) which extends at a right angle to the limbs (152).

15. A furniture fitting according to one of the claims 12 to 14, wherein the elongated holes (113) are L-shaped in the limbs (112) of the base element (11), with a section of the respective elongated hole (113) extending transversely to the base (110) of the base element (11) and providing a set-down position (114) for the second axle (13) in a tensioned state of the at least one tension spring (14).

16. A furniture fitting according to claim 15, wherein the unlatching plate (15) comprises at least one spring element (158) for pressing the unlatching plate (15) away from the base (150) of the base element (11) at least in a region of the second axle (13) and for holding the second axle (13) in the set-down position (114) and/or for moving it into the set-down position (114).

17. A furniture fitting according to claim 16, wherein the at least one spring element (158) is a spring tongue which protrudes from the base (150) of the unlatching plate (15).

18. A furniture fitting according to one of claims 2 to 17, wherein the base element (11) and/or the unlatching plate (15) and/or the second fitting part (20) are made of sheet metal, preferably in a punching and bending process.

19. A piece of furniture with at least two furniture parts, **characterized in that** the piece of furniture has at least one furniture fitting according to one of claims 1 to 18 for connecting the at least two furniture parts.

## Revendications

1. Ferrure de meuble pour l'assemblage de parties de meubles, en particulier de meubles capitonnés, avec une première partie de ferrure (10) qui peut être fixée à un première partie de meuble et une deuxième partie de ferrure (20) qui peut être fixée à une deuxième partie de meuble, **caractérisée en ce que**
- la première partie de ferrure (10) présente une base (110) et deux axes (12, 13), parallèles l'un à l'autre et parallèles à la base,
- un premier axe (12) étant fixé à la première partie de ferrure (10) et un deuxième axe (13) étant supporté avec possibilité de translation par rapport au premier axe (12) perpendiculairement aux axes (12, 13) contre la force d'un accumulateur d'énergie, et
- la deuxième partie de ferrure (20) présentant un premier réceptacle et un deuxième pour le premier axe et le deuxième (12, 13), la deuxième partie de ferrure (20) pouvant être posée avec le premier réceptacle sur le premier axe (12) et pouvant pivoter autour du premier axe (12) et le deuxième axe (13) s'enclenchant lors du pivotement dans le deuxième réceptacle afin d'assembler l'une à l'autre les deux parties de ferrure (10, 20).

2. Ferrure de meuble selon la revendication 1, dans laquelle la première partie de ferrure (10) présente un élément de base (11) en forme de U qui comprend la base (110) et deux bras (112), les axes (12, 13) traversant les bras (112) et dépassant chacun de part et d'autre au-delà de surfaces extérieures des bras (112).

3. Ferrure de meuble selon la revendication 2, dans laquelle est formée sur au moins un des bras (112) de l'élément de base (11) de la première partie de ferrure (10) une saillie (116) qui empêche une translation parallèle de la deuxième partie de ferrure (20) vers l'élément de base (11) dans l'état assemblé de la ferrure de meuble.

4. Ferrure de meuble selon la revendication 2 ou 3, dans laquelle la deuxième partie de ferrure (20) est en forme de U avec une base (21) et des bras (23), le premier réceptacle étant formé par une première découpe (24) dans les bras (23) et le deuxième réceptacle par une deuxième découpe (25) lui faisant face dans les bras (23).

5. Ferrure de meuble selon la revendication 4, dans laquelle la première découpe (24) et la deuxième découpe (25) sont disposée sur des arêtes latérales opposées du bras (23) e sont ouvertes vers l'arête latérale.

6. Ferrure de meuble selon la revendication 5, dans laquelle la première découpe (24) s'élargit en forme de V vers l'arête latérale du bras (23).

7. Ferrure de meuble selon la revendication 5 ou 6, dans laquelle un creux (29) supplémentaire est formé sur un côté de la première découpe (24) opposé à la base (21).

8. Ferrure de meuble selon la revendication 5 ou 6, dans laquelle la première découpe (24) est évasée en direction de l'arête longitudinale du bras (23).

9. Ferrure de meuble selon l'une des revendications 4 à 8, dans laquelle un biseau d'approche (26) pour le deuxième axe (13) est prévu sur un côté longitudinal libre de chaque bras (23) au niveau de la deuxième découpe (25).

10. Ferrure de meuble selon l'une des revendications 2 à 9, dans laquelle le deuxième axe (13) est guidé dans les bras (112) avec possibilité de translation dans des trous oblongs (113).

11. Ferrure de meuble selon l'une des revendications 1 à 10, dans laquelle l'accumulateur d'énergie est au moins un ressort de traction (14) qui se met en prise sur le premier axe et le deuxième (12, 13).

12. Ferrure de meuble selon l'une des revendications 2 à 11, dans laquelle une tôle de déverrouillage (15) également en forme de U, avec une base (150) et des bras (152), est insérée dans l'élément de base (11), reliée par ses bras (152) au deuxième axe (13) et capable de translation par rapport au premier axe (12) et à l'élément de base (11).

13. Ferrure de meuble selon la revendication 12, dans laquelle dépassent de la base (150) des pattes de guidage (154) qui forment un guide au moins latéral pour le ressort de traction (14).

14. Ferrure de meuble selon la revendication 12 ou 13, dans laquelle au moins une patte de déverrouillage (155, 156) est formée sur au moins un côté perpendiculaire aux bras (152) de la base (150) de la tôle de déverrouillage (15).

15. Ferrure de meuble selon l'une des revendications 12 à 14, dans laquelle les trous oblongs (113) des bras (112) de l'élément de base (11) sont en forme de L, une section de chaque trou oblong (113) passant transversalement par rapport à la base (110) de l'élément de base (11) et formant une position de pose (114) pour le deuxième axe (13) quand l'au moins un ressort de traction (14) est tendu.

16. Ferrure de meuble selon la revendication 15, dans laquelle la tôle de déverrouillage (15) présente au moins un élément de ressort (158) pour écarter la tôle de déverrouillage (15) de la base (150) de l'élément de base (11) au moins dans une zone du deuxième axe (13) et retenir le deuxième axe (13) dans la position de pose (114) et/ou le déplacer dans la position de pose (114).

17. Ferrure de meuble selon la revendication 16, dans laquelle l'au moins un élément de ressort (158) est une languette de ressort qui dépasse de la base (150) de la tôle de déverrouillage (15).

18. Ferrure de meuble selon l'une des revendications 2 à 17, dans laquelle l'élément de base (11) et/ou la tôle de déverrouillage (15) et/ou la deuxième partie de ferrure (20) sont fabriqués en tôle, de préférence par un processus de découpe à l'emporte-pièce et de pliage.

19. Meuble avec au moins deux parties de meuble, **caractérisé en ce qu'**il présente, pour l'assemblage des au moins deux parties de meuble, au moins une ferrure de meuble selon l'une des revendications 1 à 18.
